# EUROPEAN PATENT APPLICATION

(11) **EP 4 215 505 A1**
(43) Date of publication of application: **26.07.2023**
(21) Application number: 22382031.7
(22) Date of filing: 19.01.2022
(51) Int. Cl.: C04B 28/04

(54) **CEMENTITIOUS COMPOSITIONS HAVING BIOMASS ASHES, ESPECIALLY BAGASSE ASHES, AND USES THEREOF**

(71) Applicant: Sika Technology AG, 6340 Baar (CH)
(72) Inventor: PASCUAL, Thomas, 28791 Soto del Real (Madrid) (ES)
(74) Representative: Sika Patent Attorneys

(57) **Abstract**

The present invention relates to cementitious compositions comprising or consisting of a) a hydraulic binder itself comprising (in each case relative to the total dry weight of hydraulic binder) ai) 50 - 92 w%, preferably 70 - 77.55 w% of Ordinary Portland Cement, aii) 5 - 50 w%, preferably 21 - 30 w% of biomass ash, preferably bagasse ash, b) 0.01-0.5 w%, preferably 0.1 - 0.45 w% (relative to the total dry weight of the cementitious composition) of cellulose ether, c) optionally 0.05 - 2.5 w%, preferably 0.1 - 1 w% (relative to the total dry weight of the cementitious composition) of redispersible polymer powder, and d) optionally at least one activator selected from alkali metal or alkaline earth metal salts of hydroxide, formate, chloride, sulphate, and/or nitrate. The present invention also relates to uses of such cementitious compositions especially as tile adhesive

## Description

### Technical field

The present invention relates to cementitious compositions with high replacement levels of cement by biomass ash, especially bagasse ash, and having increased strength. The present invention also relates to uses of such cementitious compositions especially as tile adhesive.

### Background of the invention

Cement-based building materials, especially concrete or mortars, rely on cementitious binders. Cementitious binders typically are hydraulic binders the most abundant of which are cements and especially Ordinary Portland Cement. However, the use of cements and especially of Ordinary Portland Cement has a high environmental footprint. One major reason are the high CO₂ emissions associated with the manufacture of cements. Many efforts have thus been made to replace cements at least partially as binders from building materials.

One possibility is the use of materials with cementitious properties, pozzolans and/or latent hydraulic materials as cement replacement. A known material of this type is biomass ash. Biomass ashes result from the incineration of waste biomass, such as residual materials from agriculture. Well-known types of biomass ash are rise husk ash, wheat straw ash, nutshell ashes, and sugarcane bagasse ash.

The use of biomass ash to replace cement from mortars or concrete servers two purposes. First, the reduction of cement clinker content in the mortar or concrete reduces its CO₂ footprint. Second, the biomass ash, which otherwise is a waste material and dumped into landfill, is put to a valuable use.

It is well known that the replacement of cement by materials with cementitious properties, pozzolans and/or latent hydraulic materials influences the properties of fresh as well as of hardened mortars or concrete made thereby. Especially, the water demand of fresh mortars or concrete is generally increased when replacing cement by biomass ashes. Also, the final strength of mortars or concrete can be increased or decreased when replacing cement by biomass ashes, depending on the level of cement replacement and the type of biomass ash used.

K. Ganesan et al have reported that cement replacement levels of up to 20 % are possible by sugarcane bagasse ash in a concrete formulation without deterioration of properties (K. Ganesan et al « Evaluation of bagasse ash as supplementary cementitious material » in Cement & Concrete Composites, 2007, 29, 515-524.).

CN 110282917 discloses a concrete composition having up to 20 w% of bagasse ash relative to the cement content.

In order to further decrease the CO₂ footprint of mortars or concrete, it would be desirable to replace even higher levels of cement by biomass ash.

CN 11344877 discloses a concrete composition having a cement replacement rate by bagasse ash of 10 - 30%, preferably 20%. CN 11344877 also teaches that with increased cement replacement levels by bagasse ash, the compressive strength decreases. This is a different behavior as compared to cement replacement by rice husk ash.

Without wishing to be bound by theory, it is believed that the different behavior of rice husk ash and bagasse ash is due to the different chemical and mineralogical composition of these two biomass ashes.

There exists still a need to provide cementitious compositions which have high replacement levels of cement by bagasse ash and still develop sufficient strength for given applications.

### Summary of the invention

It is an objective of the present invention to provide cementitious compositions which have high replacement levels of cement by biomass ash, especially bagasse ash, and still develop sufficient strength. Especially, it is an objective of the present invention to provide cementitious compositions which have high replacement levels of cement by biomass ash, especially bagasse ash, and which are useful as cementitious tile adhesives.

It was surprisingly found that a cementitious composition of claim 1 can solve these objectives. It has further been surprisingly found that a cementitious composition as claimed in claim 1 can be used as a cementitious tile adhesive.

The heart of the present invention lies in the combination in cementitious compositions of a hydraulic binder having high replacement levels of cement by biomass ash, preferably bagasse ash or cashew nutshell ash, with specific additives for cementitious mortars, especially cellulose ethers. Further additives useful within the present context are redispersible polymer powders and certain activators.

Thus, cement replacement levels of up to 50%, preferably, up to 40%, more preferably up to 30%, by biomass ash, preferably bagasse ash or cashew nutshell ash, can be realized in cementitious compositions of the present invention. Other biomass ashes from agricultural sources may be used instead of bagasse ashes within the present context with the exception of rice husk ash but including especially nutshell ashes.

Cementitious compositions of the present invention are particularly suitable as cementitious tile adhesives as laid out, for example, in standard DIN EN 12004:2007+A1:2012. Thus, the adhesion strength, especially the initial adhesion strength, is increased with a cementitious compositions of the present invention as compared to the same cementitious composition without having the additives but comprising as well the biomass ash, preferably bagasse ash or cashew nutshell ash.

Further aspects of the present invention are the subject matter of further independent claims. Preferred embodiments of the present invention are the subject matter of dependent claims.

### Detailed ways

In a first aspect the present invention relates to a cementitious composition comprising or consisting of
a) a hydraulic binder itself comprising (in each case relative to the total dry weight of hydraulic binder)
   ai) 50 - 92 w%, preferably 70 - 77.55 w% of Ordinary Portland Cement,
   aii) 5 - 50 w%, preferably 21 - 30 w% of biomass ash,
b) 0.01 - 0.5 w%, preferably 0.1 - 0.45 w% (relative to the total dry weight of the cementitious composition) of cellulose ether,
c) optionally 0.05 - 2.5 w%, preferably 0.1 - 1 w% (relative to the total dry weight of the cementitious composition) of redispersible polymer powder, and
d) optionally at least one activator selected from alkali metal or alkaline earth metal salts of hydroxide, formate, chloride, sulphate, and/or nitrate.

According to particularly preferred embodiments, the biomass ash is bagasse ash or cashew nutshell ash, preferably bagasse ash.

A cementitious composition within the present context is a composition comprising Ordinary Portland Cement. Ordinary Portland Cement preferably is a CEM I according to standard EN 197-1. However, Ordinary Portland Cements according to other international standards, e.g. ASTM standards or Chinese standards, can be used as well. A cementitious composition of the present invention may additionally comprise other cements besides Ordinary Portland Cement. Other cements can be composite cements, especially of the type CEM II, CEM III, CEM IV, and/or CEM V according to standard EN 197-1, alumina cement, and/or sulphoaluminate cement. The term "alumina cement" stands in particular for a cement with an aluminum content, measured as Al₂O₃, of at least 30 w%, especially at least 35 w%, in particular 35 - 58 w%. Preferably, the alumina cement is alumina cement according to standard EN 14647. Preferably, the sulphoaluminate cement is calcium sulphoaluminate cement (CSA). Examples for cementitious compositions are especially concrete and mortars.

A hydraulic binder within the present context is a binder which sets and hardens in the presence of water in a hydration reaction to form solid hydrates or hydrate phases. Preferably, the hydrates produced are not water-soluble. In particular, the hydration reactions take place essentially independent of the water content. This means that the hydraulic binder can harden and retain its strength even when exposed to water, e.g. underwater or under high humid conditions.

Biomass ash within the present context are materials which result from the incineration of waste biomass, such as residual materials from agriculture. The term "biomass ash" within the present context especially refers to bagasse ash or nutshell ash but not to rice husk ash. According to especially preferred embodiments of the present invention, the biomass ash is bagasse ash.

The term "bagasse ash" within the present context is identical and may be used interchangeably to the terms "sugarcane bagasse ash" or "sugarcane ash". Bagasse is the dry pulpy fibrous material that remains after crushing sugarcane stalks to extract their juice. Bagasse ash is obtained as the solid residue when burning of the bagasse and optionally by additional calcination. Additionally, bagasse ash may be grinded and/or sieved to certain particle size. According to embodiments, a bagasse ash of the present invention has been calcined at temperatures of between 600 - 750 °C and optionally has been grinded to a desired particle size.

The chemical composition of bagasse ash may vary considerably, depending on the type and origin of sugarcane crop from which it is obtained. It consists mainly of oxides of silicon, aluminum, calcium, and iron. According to embodiments, bagasse ash of the present invention is characterized by a chemical composition as shown in table 1a. The chemical composition can be determined by XRF analysis.

**Table 1a chemical composition of bagasse ash (in weight-%)**

| SiO₂ | Al₂O₃ | Fe₂O₃ | CaO | MgO | K₂O | Na₂O | SO₃ | Others |
|---|---|---|---|---|---|---|---|---|
| 40 - 75 | 4 - 10 | 1 - 6 | 1 - 15 | 1 - 5 | 1 - 6 | 0.5 - 2 | 2 - 8 | < 2 |

The term "nutshell ash" within the present context refers to the residue of burning and/or calcining nutshells. In particular, the term "nutshell ash" refers to cashew nutshell ashes. Nutshell ashes are obtained as the solid residue when burning of the nutshells and optionally by additional calcination. Additionally, nutshell ash may be grinded and/or sieved to certain particle size. According to embodiments, a nutshell ash, in particular cashew nutshell ash, of the present invention has been calcined at temperatures of between 600 - 750 °C and optionally has been grinded to a desired particle size.

The chemical composition of cashew nutshell ash may vary considerably, depending on the type and origin of cashew crop from which it is obtained. It consists mainly of oxides of silicon, aluminum, calcium, and iron. According to embodiments, cashew nutshell ash of the present invention is characterized by a chemical composition as shown in table 1b. The chemical composition can be determined by XRF analysis.

**Table 1b chemical composition of cashew nutshell ash (in weight-%)**

| SiO₂ | Al₂O₃ | Fe₂O₃ | CaO | MgO | K₂O | Na₂O | SO₃ | Others |
|---|---|---|---|---|---|---|---|---|
| 50 - 70 | 10 - 20 | 7 - 15 | 0.5 - 1 | 1 - 3 | 0.1 - 1 | 0.1 - 2 | 0.5 - 3 | < 2 |

The particle size of biomass ash, preferably of bagasse ash or nutshell ash, especially cashew nutshell ash, useful in the present invention is not particularly limited. However, the particle size of any such biomass ash should not be too big to ensure a uniform mix results and performance of cementitious tile adhesive. According to embodiments of the present invention the biomass ash, preferably of bagasse ash or nutshell ash, especially cashew nutshell ash, has a particle size of not more than 0.6 mm, preferably not more than 0.5 mm as measured by sieve analysis. It is, however, also possible to use biomass ash of finer particle size, such as a particle size of not more than 0.1 mm or 0.05 mm.

The particle size can be measured by sieve analysis as described for example in standard ASTM C136/C136M. The process separates fine particles from more course particles by passing the material through a number of sieves of different mesh sizes. The material to be analyzed is vibrated through a series of sequentially decreasing sieves using a single, or combination of horizontal, vertical, or rotational motion. As a result, the percentage of particles passing through a sieve of a given size is given. Within the present context, where a maximum particle size is given, this particle size relates to the particle size having a 98% pass rate measured by sieve analysis. A 98% pass rate means that 98 w% of all particles passes through a sieve of the given size.

The cementitious composition of the present invention comprises a cellulose ether. Cellulose ether can be any of carboxymethylcellulose, hydroxymethylcellulose, hydroxyethylcellulose, methylhydroxyethylcellulose, and/or methylhydroxypropylcellulose. According to embodiments, the cellulose ether is selected from methylhydroxypropylcellulose or methylhydroxyethylcellulose. Very preferably, the cellulose ether, especially the methylhydroxypropylcellulose or methylhydroxyethylcellulose has a viscosity of 150 - 180000 mPas, even more preferably of 3000 - 100000 mPas measured as a 2% solution in water at 20°C. Such cellulose ether are especially suitable to increase the strength, especially the adhesion strength, of cementitious compositions with high replacement levels of cement by biomass ash.

A cementitious composition of the present invention may comprise a redispersible polymer powder. The term redispersible polymer powder refers to a powder which contains a polymer and after introduction into water forms a stable dispersion. A redispersible polymer powder encompasses not only the polymer but typically also mixtures thereof with e.g. protective colloids, emulsifiers, and support materials. Redispersible polymer powders can be manufactured for example by spray drying of polymer dispersions as for example described in patent application EP 1042391. Suitable redispersible powders are for example available from Wacker Chemie AG under the trade name Vinnapas.

The use of redispersible powders of synthetic organic polymers is preferred for the context of the present invention. A synthetic organic polymer within the context of the present invention can be produced by radical polymerization of monomers selected form the group consisting of ethylene, propylene, butylene, isoprene, butadiene, styrene, acrylonitrile, acrylic acid, methacrylic acid, esters of acrylic acid, esters of methacrylic acid, vinyl esters, vinyl chloride. It is preferred that synthetic polymers are copolymers synthesized from two or more, preferably two, different monomers. The sequence of the copolymer can be alternating, blocked or random. Preferred synthetic organic polymers are copolymers of vinyl acetate and ethylene, vinyl acetate and ethylene and methyl methacrylate, vinyl acetate and ethylene and vinyl ester, vinyl acetate and ethylene and acrylic acid ester, vinyl chloride and ethylene and vinyl laureate, vinyl acetate and vinyl versatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester. The glass transition temperature (Tg) of said synthetic organic polymers can vary in a wide range. Tg of suitable synthetic organic polymers can be for example between -50°C and +60°C, preferably between -45°C and +35°C, more preferred between -25°C and +15°C.

According to embodiments, a cementitious composition of the present invention comprises a redispersible polymer powder which is based on a copolymer of vinyl acetate and ethylene and has a glass transition temperature of between -5 - +15 °C. Such redispersible polymer powders additionally help to increase the strength, especially the adhesion strength, of cementitious compositions of the present invention.

A cementitious composition of the present invention may additionally comprise an activator selected from alkali metal or alkaline earth metal salts of hydroxide, formate, chloride, sulphate, and/or nitrate. Salts of carbonate, hydrogen carbonate, or silicate are not preferred.

Very preferred activators are calcium hydroxide, calcium formate, sodium chloride, sodium sulphate, and/or sodium nitrate. Such activators additionally help to increase the strength, especially the adhesion strength, of cementitious compositions of the present invention. If present, it is preferred that these activators are used in a total amount of between 0.01 - 1 w% relative to the total dry weight of the cementitious composition.

A cementitious composition may further comprise other additives common in the mortar and/or concrete industry such as for example plasticizers and/or superplasticizers, air entrainers, defoamers, stabilizers, rheology modifiers, especially thickeners, water reducers, accelerators, retarders, water resisting agents, strength enhancing additives, fibers, dedusting agents, blowing agents, pigments, corrosion inhibitors, biocides, and/or chromium(VI) reducers, provided that the chemistry thereof is different to the chemistry of any biomass ash, cellulose ether, and redispersible polymer powder as described above. It can be advantageous to combine two or more of the mentioned further additives in one cementitious composition.

According to embodiments, a cementitious composition of the present invention comprises 0.05 - 1 w% (relative to the total dry weight of the cementitious composition) of at least one superplasticizer selected from the group consisting of lignosulfonates, sulfonated vinyl copolymers, polynaphthalene sulfonates, sulfonated melamine formaldehyde condensates, polyethylene oxide phosphonates, polycarboxylate ethers (PCE). Preferably, a hydraulically setting composition of the present invention comprises a PCE. Such PCE are particularly well suited to allow good processability of the hydraulically setting composition even at low water content.

A cementitious composition of the present invention may further comprise aggregates. Aggregates can be any material that is non-reactive in the hydration reaction of hydraulic binders. Aggregates can be any aggregate typically used for cementitious compositions. Typical aggregates are for example rock, crushed stone, gravel, slag, sand, especially quartz sand, river sand and/or manufactured sand, recycled concrete, slag, glass, expanded glass, hollow glass beads, glass ceramics, volcanic rock, pumice, perlite, vermiculite, quarry wastes, raw, fired, or fused earth or clay, porcelain, electro fused or sintered abrasives, firing support, silica xerogels, and/or fine aggregates such as ground limestone, ground dolomite, and/or ground aluminum oxide. Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1.

According to embodiments, at least part of the sand used for a cementitious composition of the present invention is quartz sand, river sand, manufactured sand, for example from granite or limestone, or mixtures thereof. According to a preferred embodiment, river sand is used for a hydraulically setting composition of the present invention, since it is chemically inert, strong, available in various sizes and the workability of the composition can be set advantageously. Commonly, sand is supplied in different fractions of particles passing through a sieve with clear openings. According to embodiments, sand with a maximum particle size 1 mm, preferably of 0.8 mm, especially of 0.6 mm, in each case as measured according to ASTM C136/ 136M, is used for a hydraulically setting composition of the present invention. Larger particles may lead to improper mixing.

Most preferably, aggregates are in particulate form.

According to embodiments, a cementitious composition of the present invention comprises from 35 - 85 wt.-%, preferably 50 - 80 wt.-%, especially 60 - 75 w%, based on the total dry weight of the cementitious composition, of aggregates, preferably of sand.

Thus, a preferred cementitious composition of the present invention comprises or consists of
a) a hydraulic binder itself comprising (in each case relative to the total dry weight of hydraulic binder)
   ai) 50 - 92 w%, preferably 70 - 77.55 w% of Ordinary Portland Cement,
   aii) 5 - 50 w%, preferably 21 - 30 w% of biomass ash,
b) 0.01 - 0.5 w%, preferably 0.1 - 0.45 w% (relative to the total dry weight of the cementitious composition) of cellulose ether,
c) optionally 0.05 - 2.5 w%, preferably 0.1 - 1 w% (relative to the total dry weight of the cementitious composition) of redispersible polymer powder, and
d) optionally at least one activator selected from alkali metal or alkaline earth metal salts of hydroxide, formate, chloride, sulphate, and/or nitrate,
e) optionally 0.05 - 1 w% (relative to the total dry weight of the cementitious composition) of at least one superplasticizer selected from the group consisting of lignosulfonates, sulfonated vinyl copolymers, polynaphthalene sulfonates, sulfonated melamine formaldehyde condensates, polyethylene oxide phosphonates, polycarboxylate ethers (PCE), and
f) 35 - 85 wt.-%, preferably 50 - 80 wt.-%, especially 60 - 75 w%, based on the total dry weight of the cementitious composition, of aggregates, preferably of sand.

According to particularly preferred embodiments, the biomass ash is bagasse ash or cashew nutshell ash, preferably bagasse ash.

The cementitious composition of the present invention preferably is a dry composition. Dry means that the content of water in a cementitious composition of the present invention is below 5 w%, preferably below 1 w%, especially below 0.1 w%, relative to the total weight of the cementitious composition.

Before use, a cementitious composition of the present invention is mixed with water to provide a wet mix. The amount of water used for the mixing depends, among other things, on the desired workability. Typically, a higher amount of water added will lead to a more flowable wet mix, while a lower amount of water added will lead to a stiffer wet mix. A suitable weight ratio of water to a cementitious composition of the present invention is between 0.15 - 1, preferably 0.2 - 0.6.

Hardening of the cementitious mixture of the present invention starts with the addition of water. It is thus highly preferred to add the water to the cementitious composition to produce a wet mix only shortly before the intended application of the wet mix.

In another aspect, the present invention thus relates to a kit comprising in a first compartment A a cementitious composition comprising or consisting of
a) a hydraulic binder itself comprising (in each case relative to the total dry weight of hydraulic binder)
   ai) 50 - 92 w%, preferably 70 - 77.55 w% of Ordinary Portland Cement,
   aii) 5 - 50 w%, preferably 21 - 30 w% of biomass ash,
b) 0.01 - 0.5 w%, preferably 0.1 - 0.45 w% (relative to the total dry weight of the cementitious composition) of cellulose ether,
c) optionally 0.05 - 2.5 w%, preferably 0.1 - 1 w% (relative to the total dry weight of the cementitious composition) of redispersible polymer powder, and
d) optionally at least one activator selected from alkali metal or alkaline earth metal salts of hydroxide, formate, chloride, sulphate, and/or nitrate,
and in a second compartment B comprising water,
wherein said first compartment A and said second compartment B are spatially separated.

All embodiments and preferred features as described above also relate to this aspect of the present invention. According to particularly preferred embodiments, the biomass ash is bagasse ash or cashew nutshell ash, preferably bagasse ash.

In yet another aspect, the present invention relates to the use of a cementitious composition or a kit as described above as a cementitious tile adhesive, a grouting material, a self-levelling underlayment, a self-levelling overlayment, a render, a repair mortar, a masonry thin join mortar or concrete, a screed, a wall levelling compound for interior or exterior use, a non-shrink grout, a thin joint mortar, a waterproofing mortar, or an anchoring mortar.

A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6. According to a preferred embodiment, the present invention relates to the use of a cementitious composition or of a kit as described above as a cementitious tile adhesive according to standard EN 12004.

In still another aspect the present invention relates to a method of tiling a surface, said method comprising the steps of
a) preparing a surface S,
b) providing a cementitious composition as claimed in any of claims 1 - 5 or a kit as claimed in claim 6,
c) mixing said cementitious composition with water to provide a wet mix or mixing the compartments A and B of the kit to provide a wet mix,
d) applying the wet mix obtained in step c) onto the surface S,
e) applying a tile, preferably a ceramic tile, on top of the wet mix applied to said surface S in step d),
f) hardening the assembly obtained in step e).

A wet mix of the present invention comprises or consists of
a) a hydraulic binder itself comprising (in each case relative to the total dry weight of hydraulic binder)
   ai) 50 - 92 w%, preferably 70 - 77.55 w% of Ordinary Portland Cement,
   aii) 5 - 50 w%, preferably 21 - 30 w% of biomass ash,
b) 0.01 - 0.5 w%, preferably 0.1 - 0.45 w% (relative to the total dry weight of the cementitious composition) of cellulose ether,
c) optionally 0.05 - 2.5 w%, preferably 0.1 - 1 w% (relative to the total dry weight of the cementitious composition) of redispersible polymer powder, and
d) optionally at least one activator selected from alkali metal or alkaline earth metal salts of hydroxide, formate, chloride, sulphate, and/or nitrate,
and water.

All embodiments and preferred features as described above also relate to this aspect of the present invention. According to particularly preferred embodiments, the biomass ash is bagasse ash or cashew nutshell ash, preferably bagasse ash.

The surface S is not particularly limited and may be any surface intended for tiling. The surface S may be a floor, a screed, a wall, or any other part of a building and it may be inside or outside. The surface S may be made from concrete, other cementitious compositions, plaster, plaster board, rock wool, metal, or wood.

The preparation of the surface S may involve repair of cracks, spalls, or other surface imperfections, flattening, cleaning, and/or application of a primer.

Methods for mixing of the cementitious composition with water or of the compartments A and B of the kit as described above are not particular limited and are known to the person skilled in the art. Mixing can be continuous, semi-continuous or batch-wise. Continuous mixing offers the advantage of a high material throughput.

It is possible to apply the wet mix of the present invention by any means known to the person skilled in the art. According to one embodiment, the wet mix is applied by trowel, brush, or roller. According to another embodiment, the wet mix is applied in a spray application. According to yet another embodiment, the wet mix is poured from a suitable receptable.

Spray applications have the advantage that the application can be done very quickly and in a continuous manner. Suitable equipment for such spray applications is known to the person skilled in the art.

A wet mix of the present invention can be applied in a single layer or in multiple layers. Application in multiple layers has the advantage that a higher overall layer thickness can be achieved.

A primer can be applied to the substrate before application of a wet mix of the present invention. It is also possible to apply a primer in between different layers of a wet mix of the present invention during a multiple layer application.

Upon mixing with water, a cementitious composition of the present invention will start to set and harden. The setting and hardening of a wet mix of the present invention proceeds with time and physical properties, e.g. compressive strength, tensile adhesion strength, etc. are developed thereby. A wet mix of the present invention will harden at various temperatures. It is, however, preferred to harden the assembly obtained in step e) as described above at temperatures between +4 °C and +50 °C, preferably between +5 °C and +35 °C. It is highly preferred to harden the assembly obtained in step e) as described above at a pressure of appr. 1023 mbar. It is also possible to harden and cure a wet mix of the present invention at higher temperatures and also under elevated pressure, for example in an autoclave. Hardening and curing is typically finished after 28 days. However, especially depending on temperature, pressure, and humidity, hardening and curing may already be finished after less than 28 days or last longer than 28 days.

In still another aspect the present invention relates to the hardened bodies resulting from hardening and curing a wet mix of the present invention. The present invention especially relates to a hardened cementitious tile adhesive, a hardened grouting material, a hardened self-levelling underlayment, a hardened self-levelling overlayment, a hardened render, a hardened repair mortar, a hardened masonry thin join mortar or concrete, a hardened screed, a hardened wall levelling compound, a hardened non-shrink grout, a hardened thin joint mortar, a hardened waterproofing mortar, or a hardened anchoring mortar.

The following examples will provide the person skilled in the art with further embodiments of the present invention. They are not meant to limit the invention in any way.

### Examples

The following table 2 gives an overview of raw materials used

| OPC | Ordinary Portland Cement 43.5 N |
|---|---|
| Bagasse ash | Sugarcane bagasse ash (origin East Africa and West Africa); calcination T: 600 - 750 °C; max. particle size 0.5 mm |
| Nutshell ash | Cashew nutshell ash (origin East Africa); calcination T: 600 - 750 °C; max. particle size 0.5 mm |
| Sand | Washed silica sand; particle size 0.063 - 0.5 mm |
| Cellulose ether | Methylhydroxyethyl cellulose ether; viscosity (2% solution in water, 20°C) = 35000 - 45000 mPas |
| RDP | Poly(vinyl alcohol) stabilized copolymer of vinyl acetate /ethylene with Tg = 0°C |
| Activator | calcium hydroxide or sodium sulphate or calcium formate or sodium chloride |

### Example 1- bagasse ash

The compositions as given in below table 3 were prepared at 23°C and 50% r.h. First dry mixes were prepared by weighing all ingredients except water into a Hobart N50 mixer and mixing for 2 min at low speed. Dry mixes were used without storage.

Water in an amount indicated in below table 3 was weighed into the mixing pan of a Hobart N50 mixer. The respective dry mix was then added while stirring at low speed within 5 - 10 s. Mixing was continued at low speed for 30 s. Then mixing was stopped and the pan and paddle was cleaned within 60 s. Mixing was then continued at low speed for another 60 s. Then mixing was stopped and the mix left to mature for 3 min before the mixing was resumed for 15 s. The resulting mixtures were smooth without any lumps.

Examples 1-1 - 1-5 are according to the present invention. Example C-1 is a comparative example not according to the present invention.

Adhesion strength was measured in accordance with DIN EN 1348:2007-11 after the time indicated in below table 3.

**Table 3: example 1 compositions and results**

| | **C-1** | **1-1** | **1-2** | **1-3** | **1-4** | **1-5** |
|---|---|---|---|---|---|---|
| OPC [g] | 25 | 20 | 17.5 | 17.5 | 17.5 | 17.5 |
| Bagasse ash [g] | | 5 | 7.5 | 7.5 | 7.5 | 7.5 |
| Sand [g] | 74.75 | 74. 75 | 74. 75 | 74.75 | 73.75 | 73.75 |
| Cellulose ether [g] | 0.25 | 0.25 | 0.25 | 0.15 | 0.25 | 0.15 |
| RDP [g] | | | | 0.1 | | 0.1 |
| Activator [g] | | | | | 1 | 1 |
| Mixing water [g] | 20 | 22 | 24 | 24 | 25 | 25 |
| Dynamic Plasticity [mm] | 145 | 143 | 145 | 145 | 160 | 160 |
| Adhesion strength after 7d [MPa] | 0.4 | 0.7 | 0.6 | 0.6 | 0.3 | 0.5 |
| Adhesion strength after 28d [MPa] | 0.4 | 0.7 | 0.5 | 0.7 | 0.6 | 0.8 |

As can be seen from the results of above table 3 the replacement of 20 w% of cement by bagasse ash increases the water demand but also increases the adhesion strength after 7d and 28d (cf 1-1 vs C-1). The replacement of 30 w% of cement by bagasse ash leads to an additional increase in water demand, increases the adhesion strength after 7d, and slightly also after 28d (cf 1-2 vs C-1), and clearly leads to lower adhesion strength as compared to the replacement of only 20 w% cement by bagasse ash (cf 2 vs 1-1). The additional use of redispersible polymer powder leads to an increase in adhesion strength after 28d at high replacement levels (cf 1-3 vs 1-2), while the additional use of activator is not beneficial (cf 1-4 vs 1-2). The combined use of redispersible polymer powder and activator leads to a significant increase in 28d strength (cf 1-5 vs 1-2).

### Example 2 - cashew nutshell ash

Examples C-2 as well as 2-1 to 2-3 were prepared in the same way as examples C-1 and 1-1 to 1-5 above.

Examples 2-1 - 2-3 are according to the present invention. Example C-2 is a comparative example not according to the present invention.

**Table 4: example 2 compositions and results**

| | **C-2** | **2-1** | **2-2** | **2-3** |
|---|---|---|---|---|
| OPC [g] | 25 | 20 | 17.5 | 17.5 |
| Nutshell ash [g] | | 5 | 7.5 | 7.5 |
| Sand [g] | 74.75 | 74.75 | 74.75 | 74.75 |
| Cellulose ether [g] | 0.25 | 0.25 | 0.25 | 0.15 |
| RDP [g] | | | | 0.1 |
| Mixing water [g] | 20 | 23 | 25 | |
| Dynamic Plasticity [mm] | 145 | 141 | 145 | n.m. |
| Adhesion strength after 7d [MPa] | 0.4 | 0.7 | 0.4 | n.m. |
| Adhesion strength after 28d [MPa] | 0.4 | 0.5 | 0.5 | n.m. |

| | | | | |
|---|---|---|---|---|
| n.m.: not measured | | | | |

## Claims

1. A cementitious composition comprising or consisting of
a) a hydraulic binder itself comprising (in each case relative to the total dry weight of hydraulic binder)
ai) 50 - 92 w%, preferably 70 - 77.55 w% of Ordinary Portland Cement,
aii) 5 - 50 w%, preferably 21 - 30 w% of biomass ash,
b) 0.01 - 0.5 w%, preferably 0.1 - 0.45 w% (relative to the total dry weight of the cementitious composition) of cellulose ether,
c) optionally 0.05 - 2.5 w%, preferably 0.1 - 1 w% (relative to the total dry weight of the cementitious composition) of redispersible polymer powder, and
d) optionally at least one activator selected from alkali metal or alkaline earth metal salts of hydroxide, formate, chloride, sulphate, and/or nitrate.

2. A cementitious composition according to claim 1, **characterized in that** the biomass ash is bagasse ash or cashew nutshell ash, preferably bagasse ash.

3. A cementitious composition according to any of the previous claims, **characterized in that** the cellulose ether is selected from methylhydroxypropylcellulose ether or methylhydroxyethylcellulose ether.

4. A cementitious composition according to any of the previous claims, **characterized in that** the redispersible polymer powder is based on a copolymer of vinyl acetate and ethylene and has a glass transition temperature of between -5 - +15 °C.

5. A cementitious composition according to any of the previous claims, **characterized in that** it additionally comprises 0.05 - 1 w% (relative to the total dry weight of the cementitious composition) of at least one superplasticizer selected from the group consisting of lignosulfonates, sulfonated vinyl copolymers, polynaphthalene sulfonates, sulfonated melamine formaldehyde condensates, polyethylene oxide phosphonates, polycarboxylate ethers (PCE).

6. A cementitious composition according to any of the previous claims, **characterized in that** the biomass ashes have a particle size of not more than 0.6 mm, preferably not more than 0.5 mm as measured by sieve analysis.

7. A kit comprising in a first compartment A a cementitious composition comprising or consisting of
a) a hydraulic binder itself comprising (in each case relative to the total dry weight of hydraulic binder)
ai) 50 - 92 w%, preferably 70 - 77.55 w% of Ordinary Portland Cement,
aii) 5 - 50 w%, preferably 21 - 30 w% of biomass ash,
b) 0.01 - 0.5 w%, preferably 0.1 - 0.45 w% (relative to the total dry weight of the cementitious composition) of cellulose ether,
c) optionally 0.05 - 2.5 w%, preferably 0.1 - 1 w% (relative to the total dry weight of the cementitious composition) of redispersible polymer powder, and
d) optionally at least one activator selected from alkali metal or alkaline earth metal salts of hydroxide, formate, chloride, sulphate, and/or nitrate,
and in a second compartment B comprising water,
wherein said first compartment A and said second compartment B are spatially separated.

8. Use of a cementitious composition as claimed in any of claims 1 - 6 or of a kit as claimed in claim 7 as a tile adhesive according to standard EN 12004.

9. A method of tiling a surface, said method comprising the steps of
g) preparing a surface S,
h) providing a cementitious composition as claimed in any of claims 1 - 6 or a kit as claimed in claim 7,
i) mixing said cementitious composition with water to provide a wet mix or mixing the compartments A and B of the kit to provide a wet mix,
j) applying the wet mix obtained in step c) onto the surface S,
k) applying a tile, preferably a ceramic tile, on top of the wet mix applied to said surface S in step d),
I) hardening the assembly obtained in step e).
